# EUROPEAN PATENT SPECIFICATION

(11) **EP 2 101 192 B1**
(45) Date of publication and mention of the grant of the patent: **12.09.2012**
(21) Application number: 08152537.0
(22) Date of filing: 10.03.2008
(51) Int. Cl.: G01S 13/56, G01S 13/18

(54) **A method and system for presence detection**
Verfahren und System zur Anwesenheitserkennung
Procédé et système pour la détection de présence

(43) Date of publication of application: 16.09.2009
(73) Proprietor: Volvo Car Corporation, 405 31 Göteborg (SE)
(72) Inventor: Axell, Claes Eric, 429-35 Kullavik (SE); Svedoff, Göran, 421 66 Västra Frölunda (SE)
(74) Representative: Andersson, Per Rune

(56) References cited:
- EP-A- 0 787 998
- EP-A2- 0 023 625
- GB-A- 1 605 298
- GB-A- 2 081 545
- US-B1- 6 426 716
- KUMRU C ET AL: "Implementation of Fully Polarimetric Random Noise Radar" IEEE ANTENNAS AND WIRELESS PROPAGATION LETTERS, IEEE, PISCATAWAY, NJ, US, vol. 4, no. 1, 1 December 2005 (2005-12-01), pages 125-128, XP011131026 ISSN: 1536-1225

## Description

### TECHNICAL FIELD:

The present invention relates to a use of a presence detection system within a predetermined detection volume having an outer boundary, using an arrangement for transmitting and receiving microwave radiation

The invention also relates to a system for presence detection within a predetermined detection volume having an outer boundary, comprising an arrangement for transmitting and receiving microwave radiation.

### STATE OF THE ART:

Systems for detection of the presence of humans and animals in a defined area or space are well-known and are commonly used, for example as intrusion detection systems. With regard to vehicles, for example, it is common today to use intrusion detectors in order to provide an alarm in the event that presence of a human or an animal is detected within the passenger compartment of the vehicle. In this manner, it can be expected that the risk for theft of the vehicle, or theft of objects being stored in the vehicle, can be decreased.

A system for presence detection in a vehicle may comprise a combined radio transmitter and receiver based on microwave technology, which means that the radio transmitter is arranged for emitting microwave radiation into a specified space corresponding to the vehicle's passenger compartment. Furthermore, the receiver is arranged for detecting any microwave radiation which is reflected as a result of humans or animals being present in said space. In order to achieve this, it is previously known to use, for example, microwave-based detection units of the so-called Doppler motion sensor type. Such units are based on the Doppler shift phenomenon in order to detect motion of humans and animals in a space.

Regarding prior art, it can be noted that the patent document US 6426716 teaches a motion sensor based on a microwave transceiver apparatus. Furthermore, the patent document EP 213558 teaches an intrusion detection device based on microwave technology, wherein an oscillator which is used to generate microwave radiation is also used as a detector.

EP 0 787 998 discloses a microwave sensor for monitoring vehicle interiors having a detection volume defined by a minimum and maximum range by adjusting a variable delay. EP 0 023 625 discloses a microwave sensor for monitoring exterior volumes wherein the transmitter and receiver are connected with a fixed delay line to establish an inner and outer boundary of the detection volume.

In the field of intrusion detection, especially in vehicle intrusion detectors, there exists a challenge in that intrusion should only be detected in a very well-defined space, i.e. corresponding to a well-defined distance from the detector. This means that the components which are used, in particular for the microwave transmitter and receiver, must be very accurate and of high quality so that the detection sphere can be defined in an exact manner within the vehicle. Otherwise, there will be a risk for false alarms if for example a person or animal passes just outside of the detection sphere. Such false alarms are of course unwanted.

Since microwave power decreases rapidly with increased distance, the received signal strength is much higher for objects close to an intrusion detector according to the above. That means that small things in the close vicinity of the transmitter, such as insects, or small vibrations affecting coins or a liquid in a cup causing relatively small movements might trigger the alarm. False detections due to such small movements are of course unwanted.

As a conclusion, it would be desirable to achieve an intruder detection device which is arranged for avoiding false detections according to the above. This can be achieved by means of a detection volume or detection space being in the form of a shell having inner and outer boundaries. The purpose of the inner boundary is to avoid false detections due to small movements close to the intrusion detector, and the purpose of the outer boundary is to avoid false detections due to movements outside the vehicle.

According to prior art, it is difficult to provide an intrusion detection system having precisely defined boundaries. This means that unwanted false alarms may occur, which is a disadvantage. For this reason, there is a demand for improved systems arranged for precisely regulating the detection boundaries around an intrusion detector - which means that false alarms can be minimized or preferably eliminated - while still using components and circuit solutions at a relatively low cost.

### SUMMARY OF THE INVENTION:

Consequently, an object of the present invention is to provide a system and its use for intrusion detection in which the above-mentioned drawbacks can be overcome, in particular so as to obtain a cost-effective and simple system and method but without generally any risk for false alarms.

This object is achieved by means of a use of the type mentioned initially which comprises feeding a feed-back burst to a microwave mixer via a microwave delay element such that the microwave mixer receives the feed-back burst with a pre-determined delay relative to the transmitted burst, and such that an inner boundary is defined for the detection volume.

The object is also achieved by means of a system of the kind mentioned initially which comprises a microwave delay element positioned between the oscillator and the mixer, such that each feed-back burst is fed to a microwave mixer with a certain time delay, relative to the transmitted burst, and such that an inner boundary is defined for the detection volume.

By means of the invention, certain advantages are obtained. Firstly, it can be noted that the invention provides an intrusion detector with sharply defined outer and inner boundaries of the detection volume around the sensor. This drastically reduces the number of false alarms.

The invention is suitably intended to be used with an intrusion detector of the type which is based on the Doppler effect on transmitted microwave radiation.

### BRIEF DESCRIPTION OF THE DRAWINGS:

The invention will now be described in more detail with reference to a preferred exemplary embodiment and to the attached drawings, in which:
- Fig. 1: is a schematic drawing of a vehicle being equipped with an arrangement in accordance with the present invention;
- Fig.2: is a schematic block diagram showing the design of an arrangement in accordance with an embodiment of the invention; and
- Fig. 3: is a diagram showing a sequence of timing pulses in order to illustrate the principles of the invention.

### PREFERRED EMBODIMENT:

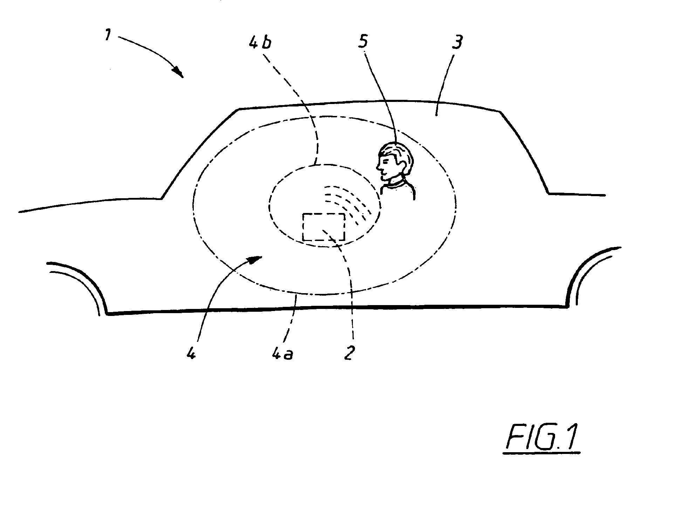

With reference to Figure 1, there is shown a simplified schematic drawing of a part of a vehicle 1 which is equipped with a system for presence detection according to the principles of the present invention. More precisely, Fig. 1 shows a mid section of a conventional passenger car 1. As shown in a schematic manner, the car 1 is provided with a transmitter and receiver unit 2 for presence detection which is preferably positioned in a central part of the car's 1 passenger compartment 3. More precisely, the transmitter and receiver unit 2 is suitably located between the two front seats (not shown) of the vehicle, for example in a console which is mounted to the floor of the car 1.

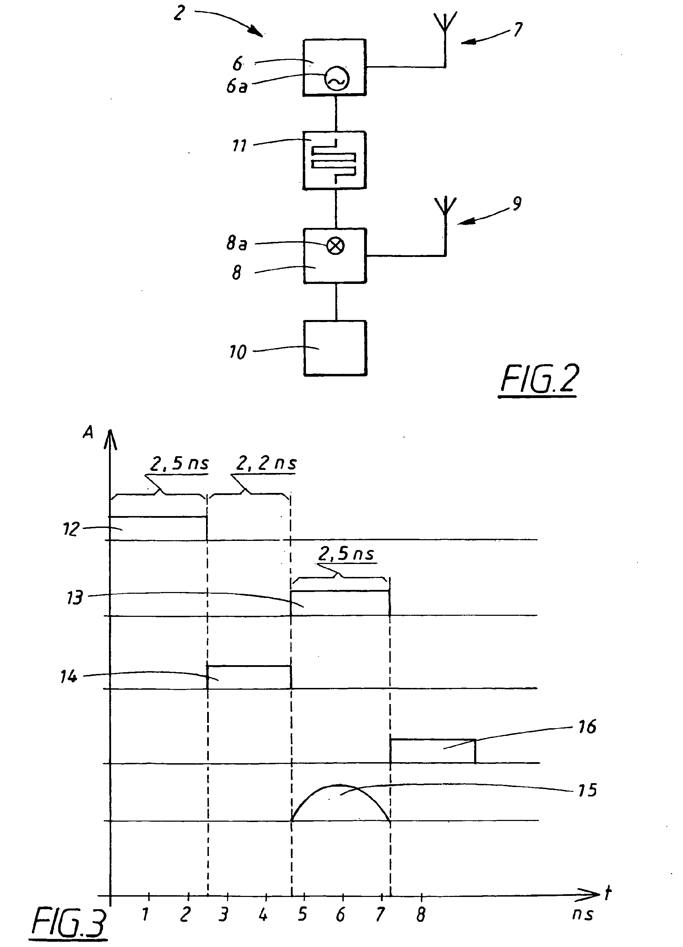

As will be described in greater detail below, the transmitter and receiver unit 2 comprises a microwave transmitter which is arranged for transmitting microwave radiation into the passenger compartment 3. As illustrated in a schematic manner in Fig. 1, the microwave radiation is emitted into a predetermined presence detection volume 4 having dimensions and being positioned so as to correspond to a predetermined part of the passenger compartment of the car 1 in which the presence of a living human person (or animal) is to be detected. Such a person is illustrated in a simplified manner by means of reference numeral 5 in Fig. 1. To achieve such detection, the transmitter and receiver unit 2 is arranged in a manner which now will be described in detail with reference to Figs. 2 and 3.

Figure 2 is a schematic diagram of the transmitter and receiver unit 2, which comprises a microwave transmitter 6 comprising a microwave oscillator 6a and an associated transmitter antenna 7. For example, the microwave transmitter 6 can be arranged for emitting microwave radiation at a frequency of 5.8 GHz, but the invention is not limited to this frequency only but can be varied.

The transmitter and receiver unit 2 also comprises a microwave receiver 8 and an associated receiver antenna 9, the receiver comprising a microwave mixer 8a. The transmitter and the receiver may of course comprise many other components not described here, and for reasons of simplicity, only those parts important for the understanding of the present invention are disclosed here.

The microwave transmitter 6 is arranged for feeding the transmitter antenna 7 so as to emit radiation generally in the microwave range. The operation of a microwave transmitter and receiver for the purpose of presence detection in a given volume is known as such, and will only be described briefly below.

The microwave transmitter 6 is arranged to be pulsed on-off in order to produce short bursts, or pulses, of microwave energy to be transmitted into the detection volume 4 via the transmitting antenna 7.

The volume 4 can be said to be delimited by an outer boundary 4a, which is defined by the pulse-length of the burst of microwave energy which is transmitted, plus an additional time period which defines a delay until the burst reaches the outer boundary 4a. More precisely, a burst, or pulse, of microwave energy is transmitted to the outer boundary 4a during a first time period (a "transmission time") and is then - after having been reflected by an object located along the outer boundary 4a - transmitted back towards the receiver antenna 9 (a "receiving time"). This means that the pulse is reflected, giving rise to echoes, where each echo is received by the receiver antenna 9. Half the total time (i.e. the "transmission time" plus the "receiving time") multiplied by the speed of light approximately gives the distance from the transmitter antenna 7 to the outer boundary 4a, provided that the receiver antenna 9 is located at approximately the same position as the transmitter antenna 7.

The microwave transmitter 6 is also connected to the receiver 8, such that the received echoes are mixed with the corresponding transmitted bursts in the mixer. In other words, a certain burst is generated by the oscillator 6a and divided into two bursts by a power divider or similar; a transmitted burst and a feed-back burst, where the transmitted burst is transmitted via the transmitting antenna 7, resulting in at least one echo. In the mixer, this echo is mixed with the feed-back burst, corresponding to that transmitted burst which has given rise to the echo in question. The mixer output comprises a differential frequency, indicating a difference between the burst frequency and the echo frequency.

Such a difference is possible due to a Doppler shift which in turn is caused by the echo being reflected by a moving object. Such a difference is either negative or positive depending on whether the object in question is moving towards or away from the transmitting antenna 7, i.e. the burst source. The differential frequency is fed from the mixer 8a in the receiver 8 to a detector 10, which detects if there is a difference present.

The mixer can be in the form of a phase detector. In such case, it is the phase difference between burst and echo frequency that defines the output.

It is important to realize that the mixing only takes place between two signals, which means that echo detection and generation of the differential frequency only takes place while both the burst and the echo signal are present in the mixer 8a at the same time. As mentioned above, the length of the burst determines the outer boundary 4a. To define an inner boundary 4b, it is needed that the mixing between the burst and the echo signal are delayed a short time.

According to the present invention, a delay line 11 is placed between the transmitter 6 and the receiver 8, such that the signal from the oscillator 6a is delayed a short time period before it reaches the mixer 8a. The delay time is determined in such a way that the inner boundary 4b is well defined, having a desired extension.

The delay line is a well-known microwave component, and may be constituted by a meander-shaped microstrip or stripline conductor, preferably made in a multi-layer circuit board. It may also be comprised by a coaxial conductor.

The present invention will now be described with an illustrative example with reference to Figure 2 and Figure 3, where it is to be noted that all distances given are approximations. On the x-axis, the passing time is shown in ns, and on the y-axis, a relative pulse amplitude A is shown.

According to this example, we follow one certain burst amongst a series of bursts. The burst time of a burst 12 is 2.5 ns, and the delay line 11 has such a length that a feed-back burst 13 is delayed 3.7 ns. This means that it differs 2.2 ns between the end of a certain burst and the entry of the feed-back burst into the mixer via the delay line 11. During this time period of 2.2 ns, no mixing occurs in the mixer 8a, since the feed-back burst 13 from the oscillator has 6a not yet reached the mixer 8a. This time delay of 2.2 ns corresponds to a distance of 0.66 m, calculated as (2.2·10⁻⁹) · (3·10⁻⁸) m, where 3·10⁻⁸ m/s approximately equals the speed of light.

Since the transmitted burst first travels a path to an object causing a reflection, and then travels the same path back, the distance to a detectable object, i.e. the distance from the detector to the inner boundary, is 0.33 m in this example. A first echo 14 is shown, corresponding to an object at 0.33 m from the detector.

In reality, due to losses, the mixer output signal strength 15 is relatively weak directly after 2.2 ns, but increases approximately linearly until half the burst time, i.e. during the following 1.25 ns, which in turn corresponds to a distance of 0.37 m. Furthermore, the signal strength 15 then decreases approximately linearly the end of the burst. The maximum signal strength is thus obtained for a distance of 0.6 m from the detector 2, while it gradually decreases to disappear completely at a distance of 0.90 m from the detector 2. A second echo 16 is shown, corresponding to an object at 0.90 m from the detector.

A particular aspect of the invention relates to the fact that power which is received by the microwave receiver 8 is normally proportional to 1/R², wherein R is the distance to the object. For example, if a target having a certain size produces a received signal which is of the magnitude 100 µV at a distance of 1 meter, a signal of the magnitude 10 mV is obtained at a distance of 0.1 meter. Consequently, if the distance is multiplied by 10, the signal will be multiplied by 100. According to an embodiment of the invention, it can firstly be considered that if the transmit pulse consists of, for example, 15 periods at 5.8 GHz, a certain number of those 15 periods will be used to charge a sampling capacitor (not shown), which is preferably positioned after the mixer 8a, and a certain number will be used for discharging. For example, if an echo is produced resulting from a target at medium distance, all 15 periods will be used to charge the sampling capacitor. However, if the target is moved a distance which corresponds to one period, this would mean that 14 periods will charge the capacitor. At the far end of the detection boundary, 14 periods will be used for discharging and only one for charging.

Furthermore, it can be noted that during the short transmit pulse (which is in the order of 2-3 ns), the frequency of the oscillator is swept over a certain frequency interval, for example from 5.80 GHz to 5.81 GHz. This is due to the fact that it is difficult to maintain the frequency absolutely stable during the entire transmit pulse. However, the frequency sweep is generally the same for each pulse and if a target object is positioned at a fixed distance, the same phase difference is always obtained in the mixer (i.e. a certain output voltage).

The invention is not limited to the embodiment described above, but may be modified without departing from the scope of the claims below. The invention is generally used for detection of the presence of humans or animals, suitably by detecting movement of said humans or animals, in a space of the above-mentioned type, i.e. for example in a vehicle compartment. It should be noted that the invention can be used in different types of vehicles, for example load-carrying trucks, buses, boats and other types of vehicles and vessels.

The invention can be used for intrusion detection for vehicles such as cars and trucks or generally any type of defined space or zone, i.e. a detection sphere. Also, the invention can be used for indoor and outdoor alarms, industrial robot control, home automation control, detection for actuating light when someone enters a room, automatic door openers and other applications in which there is a need for reliable and cost-effective detection of the presence of a human or animal in a detection sphere.

The present invention may be used for a detector using only one antenna being arranged for both transmission and reception. Such an arrangement for Doppler detection equipment is previously well-known.

The delay line length is normally fixed, but may be made adjustable by means of PIN diode switches, which switch on and off extra delay line parts. This enables switching of the delay line length between at least two fixed values.

The mixer may be of any convenient design, for example of the rat-race type.

## Claims

1. Use of a presence detection system inside a vehicle (1), said presence detection system having a predetermined detection volume (4) with an outer boundary (4a), and corresponding to a predetermined part of a passenger compartment of the vehicle (1), said use **characterised by**:
periodically actuating a microwave transmitter (6) such that one pulse of microwave energy is emitted in one burst (12) for each actuation, the length of said burst determining the outer boundary (4a);
dividing said burst in a transmitted burst and a feed-back burst (13);
feeding the feed-back burst (13) to a microwave mixer (8a) forming part of a microwave receiver (8) via a microwave delay element (11) such that the microwave mixer (8a) receives the feed-back burst (13) with a pre-determined delay relative to the transmitted burst, and such that an inner boundary (4b) is defined for the detection volume (4) ;
detecting reflected microwave radiation corresponding to said transmitted burst within said detection volume (4) by means of the microwave receiver (8) and feeding it to the mixer (8a); and
determining whether a moving object (5) is present in said detection volume (4) based on the output signal from the mixer (8a);

2. Use of a presence detection system inside a vehicle (1) according to claim 1, **characterized in that** it is providing an output of said microwave mixer (8a) which is generated depending on a difference between the frequency or phase of the burst (12) and a reflected echo (14).

3. Use of a presence detection system inside a vehicle (1)according to claim 2, **characterized in that** it is feeding a signal from the output of the microwave mixer (14) to a detector, and determining via a Doppler shift whether said moving object (5) is moving within said detection volume (4).

4. A vehicle (1) provided with a presence detection system within a predetermined detection volume (4) having an outer boundary (4a), and corresponding to a predetermined part of a passenger compartment of the vehicle (1), said system **characterised by** comprising a microwave transmitter (6) which in turn comprises a microwave oscillator (6a), and a microwave receiver (8) which in turn comprises a microwave mixer (8a), where the microwave transmitter (6) is arranged to emit pulses of microwave energy in bursts (12), the length of one of said bursts determining the outer boundary (4a), each burst being divided into a transmitted burst and a feed-back burst (13), where the microwave mixer (8a) is arranged to be fed with the feed-back burst (13) and reflected microwave radiation corresponding to said transmitted burst within said detection volume (4) and also to output a signal that determines whether a moving object (5) is present in said detection volume (4), wherein a microwave delay element (11) positioned between the oscillator (6a) and the mixer (8a), such that each feed-back burst (13) is fed to the microwave mixer (8a) with a certain time delay, relative to the transmitted burst, and such that an inner boundary (4b) is defined for the detection volume (4).

5. A vehicle (1) provided with a presence detection system according to claim 4, **characterized in that** said microwave mixer (8a) is arranged for providing an output which depends on a difference between the frequency or phase of the burst (12) and a reflected echo (14).

6. A vehicle (1) provided with a presence detection system according to claim 5, **characterized in that** it comprises a detector to which a signal from the output of the microwave mixer (14) is fed, said detector being arranged for determining, via a Doppler shift, whether said moving object (5) is moving within said detection volume (4).

7. A vehicle (1) provided with a presence detection system according to any one of claims 4-6, **characterized in that** said microwave delay element (11) is constituted by a meander-shaped microstrip or stripline conductor, or a coaxial conductor.

## Patentansprüche

1. Verwendung eines innerhalb eines Fahrzeuges (1) angeordneten Anwesenheitserkennungssystems, wobei das Anwesenheitserkennungssystem ein vorgegebenes Erkennungsvolumen (4) mit einer äußeren Umgrenzung (4a) aufweist, welches einem vorgegebenen Teil eines Fahrgastraums des Fahrzeuges (1) entspricht, **gekennzeichnet durch**:
periodisches Betätigen eines Mikrowellensenders (6) derart, dass ein Impuls der Mikrowellenenergie in einem Burst (12) für jede Betätigung ausgesendet wird, wobei die Länge jedes Bursts die äußere Umgrenzung (4a) bestimmt;
Einteilen des Bursts in einen gesendeten Burst und einen Rückkopplungsburst (13); Einspeisen des Rückkopplungsbursts (13) in einen Mikrowellenmischer (8a), welcher einen Bestandteil eines Mikrowellenempfängers (8) über ein Mikrowellenverzögerungselement (11) bildet, in einer solchen Weise, dass der Mikrowellenmischer (8a) den Rückkopplungsburst (13) mit einer vorgegebenen Verzögerung relativ zum gesendeten Burst empfängt, und in einer solchen Weise, dass eine innere Umgrenzung (4b) für das Erkennungsvolumen (4) definiert wird; Erkennung der reflektierten Mikrowellenstrahlung entsprechend dem gesendeten Burst innerhalb des Erkennungsvolumens (4) mittels des Mikrowellenempfängers (8) und Einspeisen von dieser in den Mischer (8a); und Bestimmen auf der Basis des Ausgangssignals des Mischers (8a), ob ein sich bewegendes Objekt (5) in dem Erkennungsvolumen (4) anwesend ist.

2. Verwendung eines Anwesenheitserkennungssystems innerhalb eines Fahrzeuges (1) nach Anspruch 1, **dadurch gekennzeichnet, dass** es ein Ausgangssignal des Mikrowellenmischers (8a) bereitstellt, welches in Abhängigkeit von einem Unterschied zwischen der Frequenz oder Phase des Bursts (12) und einem reflektierten Echo (14) erzeugt wird.

3. Verwendung eines innerhalb eines Fahrzeuges (1) angeordneten Anwesenheitserkennungssystems nach Anspruch 2, **dadurch gekennzeichnet, dass** es ein Ausgangssignal des Mikrowellenmischers (14) in ein Detektor einspeist und über einen Dopplereffekt bestimmt, ob sich das sich bewegende Objekt (5) innerhalb des Erkennungsvolumens (4) bewegt.

4. Fahrzeug (1), welches innerhalb eines vorgegebenen Erkennungsvolumens (4) mit einem Anwesenheitserkennungssystem ausgestattet ist, welches eine äußere Umgrenzung (4a) aufweist und einem vorgegebenen Teil eines Fahrgastraums des Fahrzeuges (1) entspricht, welches System **dadurch gekennzeichnet ist, dass** es einen Mikrowellensender (6), welcher wiederum einen Mikrowellenoszillator (6a) umfasst, und einen Mikrowellenempfänger (8) aufweist, welcher wiederum einen Mikrowellenmischer (8a) umfasst, wobei der Mikrowellensender (6) zum Aussenden von Impulsen der Mikrowellenenergie in Bursts (12) ausgebildet ist, wobei die Länge eines der Bursts die äußere Umgrenzung (4a) bestimmt, wobei jeder Burst in einen gesendeten Burst und einen Rückkopplungsburst (13) eingeteilt ist, wobei der Mikrowellenmischer (8a) dazu ausgebildet ist, mit dem Rückkopplungsburst (13) und reflektierter Mikrowellenstrahlung entsprechend dem gesendeten Burst innerhalb des Erkennungsvolumens (4) gespeist zu werden und ferner ein Signal auszusenden, welches bestimmt, ob ein sich bewegendes Objekt (5) in dem Erkennungsvolumen (4) anwesend ist, wobei zwischen dem Oszillator (6a) und dem Mischer (8a) ein Mikrowellenverzögerungselement (11) derart angeordnet ist, dass jeder Rückkopplungsburst (13) um eine gewisse Zeitverzögerung, relativ zum gesendeten Burst, in den Mikrowellenmischer (8a) eingespeist wird, und derart, dass eine innere Umgrenzung (4b) für das Erkennungsvolumen (4) definiert wird.

5. Fahrzeug (1), welches mit einem Anwesenheitserkennungssystem nach Anspruch 4 ausgestattet ist, **dadurch gekennzeichnet, dass** der Mikrowellenmischer (8a) dazu ausgebildet ist, ein von einem Unterschied zwischen der Frequenz oder Phase des Bursts (12) und einem reflektierten Echo (14) abhängiges Ausgangssignal bereitzustellen.

6. Fahrzeug (1), welches mit einem Anwesenheitserkennungssystem nach Anspruch 5 ausgestattet ist, **dadurch gekennzeichnet, dass** es einen Detektor aufweist, in welchen ein Ausgangssignal des Mikrowellenmischers (14) eingespeist wird, welcher Detektor zur Bestimmung, über einen Dopplereffekt, ob sich das sich bewegende Objekt (5) innerhalb des Erkennungsvolumens (4) bewegt, ausgebildet ist.

7. Fahrzeug (1), welches mit einem Anwesenheitserkennungssystem nach einem der Ansprüche 4 bis 6 ausgestattet ist, **dadurch gekennzeichnet, dass** das Mikrowellenverzögerungselement (11) durch einen mäanderförmigen Mikrostreifen oder Streifenleitungsleiter oder einen koaxialen Leiter gebildet ist.

## Revendications

1. Utilisation d'un système pour la détection de présence à l'intérieur d'un véhicule (1), ledit système pour la détection de présence présentant un volume de détection prédéterminé (4) avec une limite extérieure (4a), et correspondant à une portion prédéterminée d'une cabine passager du véhicule (1),
ladite utilisation étant **caractérisée par** les étapes consistant à:
actionner périodiquement un émetteur à micro-ondes (6) si bien qu'une impulsion d'énergie à micro-ondes est émise dans une décharge (12) pour chaque activation, la longueur de ladite décharge déterminant la limite extérieure (4a);
diviser ladite décharge dans une décharge transmise et une décharge de rétroaction (13);
alimenter la décharge de rétroaction (13) à un mélangeur à micro-ondes (8a) faisant partie d'un récepteur à micro-ondes (8) par l'intermédiaire d'un élément de retard à micro-ondes (11) si bien que le mélangeur à micro-ondes (8a) reçoit la décharge de rétroaction (13) avec un retard prédéterminé par rapport à la décharge transmise, et si bien qu'une limite intérieure (4b) est définie pour le volume de détection (4);
détecter un rayonnement à micro-onde réfléchi correspondant à ladite décharge transmise à l'intérieur dudit volume de détection (4) au moyen du récepteur à micro-ondes (8) et l'alimenter vers le mélangeur (8a), et
déterminer si un objet mouvant (5) est présent dans ledit volume de détection (4) en fonction du signal de sortie du mélangeur (8a).

2. Utilisation d'un système pour la détection de présence à l'intérieur d'un véhicule (1) selon la revendication 1, **caractérisée en ce qu'**il fournit une sortie du mélangeur à micro-ondes (8a) qui est générée en fonction d'une différence entre la fréquence ou la phase de la décharge (12) et un écho réfléchi (14).

3. Utilisation d'un système pour la détection de présence à l'intérieur d'un véhicule (1) selon la revendication 2, **caractérisée en ce qu'**il fournit un signal provenant de la sortie du mélangeur à micro-ondes (14) à un détecteur, et décide au moyen d'un décalage Doppler si ledit objet mouvant (5) se déplace à l'intérieur dudit volume de détection (4).

4. Véhicule (1) pourvu d'un système pour la détection de présence à l'intérieur d'un volume de détection prédéterminé (4) avec une limite extérieure (4a), et correspondant à une portion prédéterminée d'une cabine passager du véhicule (1), ledit système est **caractérisé en ce qu'**il comprend un émetteur à micro-ondes (6) qui, à son tour, comprend un oscillateur à micro-ondes (6a), et un récepteur à micro-ondes (8) qui, à son tour, comprend un mélangeur à micro-ondes (8a), l'émetteur à micro-ondes (6) étant agencé pour émettre des impulsions de l'énergie micro-ondes en décharges (12), la longueur de l'une desdites décharges déterminant la limite extérieure (4a), chaque décharge étant divisée dans une décharge transmise et une décharge de rétroaction (13), le mélangeur à micro-ondes (8a) étant agencé pour être alimenté avec la décharge de rétroaction (13) et un rayonnement micro-ondes réfléchi correspondant à ladite décharge transmise à l'intérieur dudit volume de détection (4) et également pour faire sortir un signal qui décide si un objet mouvant (5) est présent dans ledit domaine de détection (4), un élément de retard à micro-ondes (11) étant positionné entre l'oscillateur (6a) et le mélangeur (8a), si bien que chaque décharge de rétroaction (13) est alimentée au mélangeur à micro-ondes (8a) avec un certain temps de retard, par rapport à la décharge transmise, et si bien qu'une limite intérieure (4b) est définie pour le volume de détection (4).

5. Véhicule (1) pourvu d'un système pour la détection de présence selon la revendication 4, **caractérisé en ce que** ledit mélangeur à micro-ondes (8a) est agencé pour fournir une sortie qui dépend d'une différence entre la fréquence ou la phase de la décharge (12) et un écho réfléchi (14).

6. Véhicule (1) pourvu d'un système pour la détection de présence selon la revendication 5, **caractérisé en ce qu'**il comprend un détecteur auquel un signal provenant de la sortie du mélangeur à micro-ondes (14) est alimenté, ledit détecteur étant agencé pour déterminer, par l'intermédiaire d'un décalage Doppler, si ledit objet mouvant (5) se déplace à l'intérieur dudit volume de détection (4).

7. Véhicule (1) pourvu d'un système pour la détection de présence selon l'une quelconque des revendications 4 à 6, **caractérisé en ce que** ledit élément de retard à micro-ondes (11) est constitué par une microbande en forme de méandre ou un conducteur à ligne triplaque ou un conducteur coaxial.
